Europäisches Patentamt

European Patent Office

Office européen des brevets

(19)

(11) EP 0 761 499 A1

(12) EUROPÄISCHE PATENTANMELDUNG

(43) Veröffentlichungstag:
12.03.1997 Patentblatt 1997/11

(51) Int. Cl.⁶: **B60Q 1/44**, B60R 21/00

(21) Anmeldenummer: 96110714.1

(22) Anmeldetag: 03.07.1996

(84) Benannte Vertragsstaaten:
DE ES FR GB IT SE

(30) Priorität: 04.07.1995 DE 19524358

(71) Anmelder: **Werner, Michael**
**51427 Bergisch-Gladbach (DE)**

(72) Erfinder: **Werner, Michael**
**51427 Bergisch-Gladbach (DE)**

(54) **Warnblinklicht-Einrichtung an Kraftfahrzeugen mit selektiv-angepasster automatischer Auslösung vorwiegend zur Selektion einer Panikbremsung**

(57)     Die automatische Auslösevorrichtung insbesondere einer Warnblinkanlage an Kraftfahrzeugen durch eine die beginnende Bremsverzögerung auswertende Steuerung soll vorwiegend zur Selektion einer Panikbremsung benutzt werden können.

Es sind hierzu mehrere Drehimpulsgeber- (Segmente) von den Rädern oder der Antriebsachse geschwindigkeitsanalog initiiert, und eine entsprechend progressiv einsetzende Impulsverminderung, die somit analog einer einsetzenden Panikbremsung zu bewerten ist, wird in einem nachgeschalteten Elektronikmodul in Funktion eines Prozessrechners ausgewertet und in Verbindung mit vorgegebenen, empirisch zur jeweiligen Geschwindigkeit ermittelten und gespeicherten Referenzparametern nach Überschreiten einer Progressionsrate unter Berücksichtigung der Fahrtgeschwindigkeit und dazu ablaufendem Puffer- Zeitintervall (Ausfilterung von Schreckreflexen) zu einer praktisch selektiven Auslösung der Warnblinklichteinrichtung respektive sonstiger präventiver Sicherheitsvorrichtungen führen, wie einer Präventiv-Aufprallschutzvorrichtung und einer Sicherheitsgurt-Anstraffervorrichtung sowie Sicherheitsgurt-Arretiervorrichtung.

Die hierzu erforderliche hochauflösende Impulsverarbeitung erfolgt indem die umfangsmäßig gleich beabstandeten Geber fahrzeuggeschwindigkeitsentsprechende sowie aufeinanderfolgende Zeitintervalle bilden und diese vom überlagerten Quarztaktgenerator mit konstanten und höherfrequenten Impulsen zur digitalen Auswertung gefüllt werden; womit eine wiederholgenaue, hochaktuelle Abhängigkeit zur Geschwindigkeitsänderung gegeben ist.

**Beschreibung**

Die zum Erkennen und Warnen bei Not- und Gefahrensituationen vorgesehene und allgemein bekannte Warnblinklichteinrichtung wird infolge zunehmender Verkehrsdichte und Frequentierung besonders der Autobahnen auch resultierend in zunehmendem Maße in Gefährdungssituationen benötigt.

Dies geschieht über den vorgeschriebenen Schalter an der Armaturentafel während der Gefahrensituation über Handauslösung.

Eine außerordentliche Gefahrensituation, wie z.B. bei einer plötzlich unter schneller Fahrt auftauchenden Unfallstelle nimmt naturgemäß den Fahrer insbesondere in den entscheidenden Schrecksekunden unter Panik so in Anspruch, daß ein Einschalten von Hand nicht weiter zugemutet werden kann und der Fahrer bzw. die Fahrerin unter Stresseinwirkung infolge Notbremsen sowie Lenken und Spurhalten außerstande ist mit einer - freien Hand - noch rechtzeitig reagieren zu können.

Dies bedeutet auch, daß unter Panik ohnehin keine simultanen, kontrollierten Reaktionen möglich sind, außer den entsprechenden Routine-Reaktionen.

Dabei ist es präventiv von höchster Sicherheitsrelevanz, gerade den schnell nachfolgenden Verkehr möglichst frühzeitig auf die außerordentliche Gefahrensituation aufmerksam zu machen und damit womögliche Serien-Auffahrunfälle zu vermeiden.

Der Erfindung liegt die Aufgabe zugrunde, den Fahrer von der manuellen Betätigung bei unvermittelt erforderlicher Notbremsung, d.h. Panikbremsung, zu befreien und somit endscheidende Sekunden frühzeitiger Warnsignalgabe an den meist dichtauffolgenden Verkehr zur Verfügung zu haben, indem die Selektion der Panikbremsung ermöglicht werden soll.

Dieses Problem wird erfindungsgemäß wie im Patentanspruch dahingehend gelöst, daß ein oder mehrere Drehimpulsgeber (Winkelschnitt-Impulsgeber) von den Rädern oder der Antriebsachse geschwindigkeitsanalog initiiert werden und eine entsprechend progressiv einsetzende Impulsverminderung, die analog einer einsetzenden Panikbremsung zu bewerten ist, in einem nachgeschalteten Elektronikmodul in Funktion eines Prozessrechners (Terminologie der Mess-Steuerungs- u. Regelungstechnik) ausgewertet wird und in Verbindung mit vorgegebenen empirisch festgelegten Referenz-Parametern nach Überschreiten einer Progressionsrate unter Berücksichtigung der Fahrtgeschwindigkeit und eines ablaufenden Zeitintervalls zu einer praktisch selektiven und automatischen Auslösung der Warnblinklichteinrichtung respektive sonstiger präventiver Sicherheitsvorrichtungen führt.

Die manuelle Einschaltung der Warnblinklichter kann dabei in bisheriger Form z.B. parallel beibehalten werden; oder der Schalter mit integrierter Anzeigeblinklichtleuchte kann auch als kombinierter Quittierschalter mit der Automatik verknüpft sein.

Es sollte dabei nicht gleichzeitig die Möglichkeit bestehen, eine allgemein automatische Anlage zu schaffen, die nicht nur selektiv sich auf Panikbremsung beschränkt, sondern schließlich bei jeder normal starken Bremsung eine unnötige Auslösung zurfolge hat, somit auch den verkehrstechnischen Richtlinien durch zu häufiges Einschalten der Warnblinklichter widersprechen würde; dies auch mit Rücksicht auf eine mit der Zeit zunehmenden Abstumpfungsgefahr.In solchen normalen Fällen wird es angebrachter sein, die bisherige Praxis beizubehalten, nämlich das Ein- und Ausschalten der souveränen Entscheidung des Fahrers zu überlassen.

Desweiteren kann die Feststellung der einsetzenden Panikbremsung für die Weiterentwicklung der Kraftfahrzeug-Sicherheitstechnik von allgemein großer Bedeutung sein.

Wäre es somit auch möglich, noch während der Panikbremsung bereits zusätzliche, präventiv wirkende Sicherheitsvorrichtungen rechtzeitig auszulösen.

Eine denkbare Nutzung läßt sich in der Entwicklung einer direkt und einfach wiederverwendbaren Aufprallschutzvorrichtung sehen, wie sie heute der Airbag repräsentiert, der jedoch erst im Aufprallmoment und das nur explosionsartig seine Schutzwirkung entfalten kann und somit auch risikobehaftet sein dürfte; außerdem eben anschließend nicht mehr direkt zur Wiederverwendung "zurückgestellt" werden kann.

Auch ein unmittelbar vom Benutzer vorzunehmendes Testen der Funktionstüchtigkeit des Airbags ist ohne anschließenden umfangreichen Reparaturaufwand in der heutigen Form nicht gegeben und stellt unter Langzeitbenutzung des Fahrzeugs eine zunehmende sowie bis heute noch unbekannte und allgemeine Gefahr dar.

Ferner ergibt sich zusätzlich die Nutzungsmöglichkeit mit einem Gurtstraffer und -Arretierer, welcher jedoch rechtzeitig und somit grundlegend wirkungsvoll in Aktion treten kann und während der Panikbremsung den Sicherheitsgurt präventiv anstrafft unter der besonderen Bedeutung, daß dieser vor einer eventuellen Aufprallbeschleunigung bereits automatischmechanisch eingeklinkt ist und infolgedessen überhaupt erst wirkungsvoll zu arretieren vermag.

In der DE 4139215 C2 wird eine automatische Auslösevorrichtung einer Warnblinklicht-Einrichtung beschrieben, die im Wesentlichen eine Signalkombination, ausgehend von einem Effektivverzögerungs-Sensor (z.B. Airbag-Sensor) und einem Radverzögerungs-Sensor (abgeleitet aus elektronischem Tachometer) mittels Mikroprozessor nach vorgegebener Rezeptur auswertet, um zu einer angestrebt ausgewogenen Funktionsweise der Warnblinklicht-Anlage zu gelangen.Wobei der Radverzögerungs-Sensor hauptsächlich ein Rutschen des Fahrzeugs mit entsprechender Auslösung differenzieren soll.

2

Es wird letztlich jedoch nicht die Fähigkeit angestrebt, die Panikbremsung erfassen zu können, womit diese selektive Funktionsmöglichkeit infolgedessen nicht gegeben ist.

Es wird nicht aufgezeigt, wie der Beschleunigungsparameter im Verfahren behandelt werden soll, und es wird somit nicht das für eine weitgehende, wirkliche Selektivität erforderliche Merkmal der Progressivität eines Beschleunigungsverlaufs gesehen, damit auch nicht auf die wesentlichen Unterschiede zur Erreichung einer für die Praxis unerläßlich hohen Selektivität eingegangen.

Dieser wesentliche Unterschied kann beispielsweise folgendermaßen veranschaulicht werden:

Übt man einen Bremsvorgang so aus, daß die Druckintensität auf das Pedal - relativ langsam - aber stetig zunimmt, so wird unter einer schließlich starken, aber durchaus noch vom Fahrer kontrollierten Bremsung auch der übliche Verzögerungs-Schwellenwert, analog zu a = v/t erreicht und die Auslösung der Warnblinklichter herbeigeführt, obwohl keine wirkliche Panikbremsung vorlag.

Berücksichtigt man jedoch im Lösungssystem mit Schwerpunkt die Erfassung der Progressivität des Verzögerungsverlaufs, wie zur vorliegenden Erfindung beabsichtigt, so ergibt sich eine in der systembedingten Zeiteinheit liegende dynamische Veränderungsrate, deren für Panikbremsung charakteristische Referenz-Parameter annähernd kontinuierlich von einem Prozessrechner abgefragt bzw. verglichen werden; dabei auch in Abhängigkeit von der vorliegenden Fahrtgeschwindigkeit zu Beginn der Panikbremsung, wie nachfolgend noch ausführlicher beschrieben werden soll.

Zu vorgehendem Beispiel würde die stetig zunehmende, noch vom Fahrer kontrollierte, aber durchaus harte und praxisübliche Bremsung nach dem erfindungsgemäßen System selektiv ignoriert werden können, da eine Progressionsrate des einsetzenden Verzögerungsverlaufs genutzt werden soll.

Ebenso ließe sich im gleichen Sinne feststellen, daß ein fixer Schwellenwert keine Unterscheidung bringt, ob eine Panikbremsung oder schließlich eine länger zunehmende normale Bremsung vorliegt.

Die Arbeitsweise mittels Progressionsrate würde aber in diesem Beispiel kein unnötiges Signal auslösen.

Desweiteren zeigt sich ein womögliches Zurückgreifen auf bereits in Antiblockiersystemen (ABS-Regelsysteme) integrierte Raddrehzahl-Sensoren, DE 3702718 A1 und DE 4025742 A1, zur Abfrage einer den Schwellenwert überschreitenden Radverzögerung als nicht praktikabel.

Da zum einen die Aktivierung des ABS jeweils durch punktuell unterschiedliche Fahrbahngegebenheiten mitbeeinflußt wird bzw. sich im Ausmaß auch nach dem "schwächsten" Rad ausregelt und zum anderen der ABS-Eingriff, bezogen auf die Normalbedingungen, eine Ausdehnung des Bremsweges verursacht und dies analog zur Abschwächung der eigentlichen Bremsung unter normalen Fahrbahnbedingungen gesehen werden muß.

Mithin wird ein optimales Anpassen des Schwellenwertes an die jeweils aktuelle ABS-Eingriffs-Situation kaum sinnvoll und realistisch praktikabel sein.

Erschwerend hinzu kommt eine höchstwahrscheinlich gravierende Abhängigkeit der Bremskraft von der Fahrtgeschwindigkeit aus der gerade gebremst wird.

Das erfindungsgemäß beabsichtigte Lösungssystem kann auch desweiteren hier eine Umgehung der vorliegend beschriebenen Problematik bieten, bei ABS-Antiblockiersystemen einen möglichst selektiv wirkenden Schwellenwert definieren zu können.

Brems—"Einschaltkurven"

Diagramm 1

Wirkungsweise—Schwellenwerte

Diagramm 2

Da das Einsetzen der Bremsverzögerung die natürlich verlaufende Form einer sogenannten "Einschaltkurve" haben wird, welche in einer Funktionsgleichung die entsprechende e - *Funktion* enthält, läßt sich ein mehr oder weniger steiler Kurvenverlauf der aufbauenden Anfangsphase einer Bremsung jeweils einer einsetzenden Intensität zuordnen.

Das Fortschreiten der sich aufbauenden Bremskraft bezieht sich mithin, je nach Fahrtgeschwindigkeit äußerst kurzzeitig, auf höchstens einige erste Radumdrehungen nach einsetzender Bremsbetätigung.

Das kann die praktische Bedeutung haben, daß während der Anfangsphase der sich aufbauenden Bremskraft das ABS-System noch keinen Eingriff aktivieren kann, da die volle Auswirkung der Verzögerung und physikalischen Wechselwirkungen mit der Fahrbahn insoweit noch nicht vollständig gegeben sind, ein Charakteristikum im Steilheitsverlauf der entsprechenden "Einschaltkurve" jedoch schon als gegeben vorliegen kann, so daß sich die ergebende (maximale) Progression (Steilheit) durchaus vor Eingriff des ABS-Systems, wie eben auch zu einer Normalbremsbedingung, mit den entsprechend empirisch zugeordneten Referenz-Parametern einer Panikbremsung vom Prozessrechner vergleichen läßt.

Um diesen äußerst kurzfristigen Funktionsverlauf praktisch erfassen und bewerten zu können, bedarf es eines hochauflösenden Erfassungssystems. Grundsätzlich ergeben sich zwei Methoden:

Methode 1

Es wird nach der Anzahl der Impulssegmente ein hochauflösender Impulsgeber auf die Achsen angebracht (z.B. Winkelschritt-Impulsgebereinheit).

Damit ist die Anzahl Impulse je Zeiteinheit (Quarztakter des Prozessors) proportional zur Geschwindigkeit; indirekt auch zur Bremsverzögerung (negative Beschleunigung).

Bei konstanter Geschwindigkeit ist die Zahl der Impulse n = const., etc.

Da $n \sim v(t)$ ist, läßt sich der Bremsvorgang direkt auf die Geschwindigkeit beziehen.

(Hierzu auch annähernd US-Patent 4357594)

Modellhaft sollte sich folgendes Aussehen zeigen:

$$v(t)$$

Panik—

Normal—

$$v_0$$

$$0$$

$$t$$

ca. $\Delta t$   Anfangsphase

**Diagramm 3**

Formelmäßig sollte $v(t) \approx v_0 e^{-\beta t2}$ sein, wobei $\beta$ die Stärke bzw. Intensität der Bremsung charakterisiert. Die Bremsverzögerung wird durch die Impulsverzögerung $J = \Delta n / \Delta t \sim \Delta v / \Delta t$ gemessen.

$$v(t)$$

$$v_0$$

$$\alpha_2$$

$$0 \quad 1 \quad 2 \quad 3 \quad t$$

(Die Auslegung der Funktionsverläufe ist nur qualitativ zu sehen.)

**Diagramm 4**

Es werden also die Impulse gezählt, die in gleichen Zeitabschnitten ausgelöst werden: 1.) Vor der Bremsung: n0; 2.) von t0 bis t1 : n1 3.) von t1 bis t2 : n2 u.s.w. Dann ist die Impulsverzögerung:

$$J_1(t) = (n_1 - n_0) / n_0 \text{ allgemein: } J(t) = (n_i - n_{i-1}) / n_0; \text{ für } i=1,2,3,....$$

Geometrisch entspricht somit auch $J_2 = \tan \alpha_2$
Dann ist die Impulsverzögerungs-Progression P(t) = J2/J1 u.s.w., d.h. das Verhältnis der nacheinander gemessenen Impulsverzögerungen zur ursprünglichen.
Sollte P(t) einen für Panikbremsung charakteristischen Referenzwert (empirische Parameter) überschreiten, so erfolgt die Auslösung.

Beispiel:

n0 = 100 Imp.; n1 = 98 ; n2 = 93 ; n3 = 84 Imp. gezählt (n0 bei v0, vor der Bremsung) Somit wird die Impulsverzögerung J1 = - 2/100; J2 = - 5/100; J3 = - 9/100 und die Progressionsrate (Progressivität) P1 = J2/J1 = 5/2 ; P2 = 9/2.

Im anschließend annähernd linear abfallenden Teil ergeben sich markante Zahlenwerte wie -1- bzw. -0-, so daß dieser Übergang leicht abgefragt und verwertet werden kann.

Die Methode 1 hat jedoch den Nachteil, daß die erforderliche große Auflösung, auch für die Verarbeitung in den Zahlenwerten, über die Anzahl der Impulssegmente erzeugt werden muß, mithin durchaus einige hundert Segmente des Schrittgebers erforderlich werden. Das bringt für die robuste Anwendung in der Kraftfahrzeugtechnik Probleme mit sich, zumal unter einem sicherheitstechnischen Aspekt eine möglichst geringe, funktionssichere Anzahl von Bauelementen vorhanden sein sollte. Letzeres betrifft auch eine Anwendung mittels externem Laufwerk und erforderlichem höchstpräzisen Synchronantrieb (vergl. Tachometerwelle).

## Methode 2

### Konstante Zeitschiene (quarzgetaktet)

Schaubild-Skizze (Die Zahlenwerte sind nur qualitativ zur Veranschaulichung gewählt.)

Es liegt hier eine sehr geringe, erforderliche Anzahl Impulsgeber- (Segmente) vor, real dürften bereits 2 bis 3 Impulsgeber umfangsgleich angeordnet genügen.

Eine quarzgetaktete Zeitschiene mit relativ hoher Frequenz (einige kHz) wird hierbei die jeweils zwischen zwei benachbarten Impulsgebern liegenden, jedoch ungleichen Zeitsequenzen, mit der entsprechend gezählten Anzahl von Quarztakt-Impulsen füllen, welche ähnlich dem in -Methode 1- beschriebenen Verfahren auf die jeweils vorliegende Progressivität kontinuierlich vom Prozessrechner untersucht und ebenso mit den Referenz-Parametern verglichen werden; was im Hinblick auf die empirische Ermittlung nachfolgend noch näher beschrieben werden soll.

Die zur - Methode 1 - vorhandene direkte Proportionalität zur Geschwindigkeit ist in diesem Falle nicht vorhanden, indirekt liegen jedoch auch unter diesen Abläufen als proportional anzusehende Zusammenhänge vor.

Für diese praktische, erfindungsgemäße Absicht in der Anwendung, ist eine direkte Proportionalität zur negativen Beschleunigung bzw. zur abnehmenden Fahrtgeschwindigkeit auch nicht erforderlich, da es eigentlich nur alleine auf die Reproduzierbarkeit der erfaßten Parameter, unter den selben Bedingungen, ankommt.

Es liegt zwar eine Tendenz zur Verschiebung der Toleranzbereiche vor, die sich bereits bei etwas höheren Fahrtgeschwindigkeiten, die in erster Linie relevant sind, durchaus wieder praktisch kompensieren können.

Hinsichtlich der empirisch aufzunehmenden Referenz-Parameter besitzt der Processor eine zu diesem Zweck eigens vorgesehene Funktionsstufe, die nach Bedarf mit gesonderter Anwahl vom Bediener aufgerufen werden kann. Das kann beispielsweise unter ausschließlicher Befugnis ab Werk vorgenommen werden, indem der Processor in dieser Funktionsstellung sich die "eingefahrenen Parameter" festhält und sodann annähernd kontinuierlich auf benachbarte Geschwindigkeiten selbsttätig interpoliert, was jeweils unter einigen verschiedenen Geschwindigkeiten mit entsprechend abrupten Vollbremsungen aufnormaler Fahrbahn eingeleitet wird. Bei gleichen Wagentypen genügt sodann die direkte Datenübertragung.

Oder es wäre auch schließlich eine Entwicklung denkbar, eine sogenannte, bei Computern heute häufig vorzufindende, "Self-Learning" Funktion unterzubringen, die nach entsprechenden Anlässen, z.B. Bauteileveränderungen, u.a. auch vom Fahrer selbst mittels der abrupten Vollbremsung sporadisch auf die Funktionsbereitschaft hin "trainiert" wird, womit gleichzeitig ein augenscheinlicher Test verbunden werden kann.

Letztlich wird erfindungsgemäß die für eine Panikbremsung typische, psychologisch motivierte Verhaltensweise mit in das Lösungssystem einbezogen, indem, variabel nach Fahrtgeschwindigkei aus der die Panikbremsung geschieht und vom Prozessrechner als solche eingangsmäßig erkannt wurde, die Auslösung um ein entsprechend ablaufendes, vorgepuffertes Zeitintervall hinausgezögert werden soll.

Dies dient zum einen dazu, Schreck-Reflexen, die nur kurzzeitige Auswirkung haben können, zu überbrücken, zum anderen jedoch dazu, um nach Ablauf dieses vorgepufferten Zeitintervalls nochmals vom Prozessrechner die Abfrage durchführen zu lassen, ob weiterhin die hohe Bremsintensität vorliegt.

Nur wenn dies bejahend registriert wird, erfolgt das Auslösesignal. Beispielhaft dürfte somit einsehbar sein, daß unter normalen Umständen keine abrupte Vollbremsung unter schneller Fahrt auf einer Autobahn - längeranhaltend - vorgenommen wird, wenn nicht eine außergewöhnliche Gefahr dies bedingt, außer bei einer erwähnten Schreckreflex - Reaktion mit nur momentaner Auswirkung.

In diesem Zusammenhang kann es sich als sinnvoll und effektiver erweisen, wenn, wie schon erwähnt, dieses Zeitintervall als zur Fahrtgeschwindigkeit gehörend, variabel vom Prozessrechner zugeordnet werden kann, so daß auch hierzu entsprechend empirische, oder erfahrungsgemäße Werte zur Anwendung kommen können.

Die Effektivität einer solchen Warnsignalgabe kann darüberhinaus auch desweiteren noch erheblich gesteigert werden indem die Intensität, mithin die Leuchtstärke und Blinkfrequenz, diese größerwerdend analog bei höheren Werten, vorwählbar und variabel vom Prozessrechner über eine integrierte Funktionsstufe optimiert wird.

Entsprechend reaktiv wirksam könnte beispielsweise eine im ersten Moment der signalisierten Panikbremsung einsetzende erhöhte Leuchtstärke in Verbindung mit einer wesentlich erhöhten Blinkfrequenz wirken, so daß sich diese Warnsignalgabe weithin sichtbar in ihrer Art vom gewohnten Niveau der Signallichter sofort abhebt, um sodann anschließend in kontinuierlicher Verminderung auf die üblichen Werte zurückzugehen.

**Patentansprüche**

1.  Automatische Auslösevorrichtung einer Warnblinklichtanlage an Kraftfahrzeugen
    dadurch gekennzeichnet,
    daß ein oder mehrere Drehimpulsgeber (Winkelschritt-Impulsgeber) von den Rädern oder der Antriebsachse geschwindigkeitsanalog initiiert werden und eine entsprechend progressiv einsetzende Impulsverminderung, die analog einer einsetzenden Panikbremsung zu bewerten ist, in einem nachgeschalteten Elektronikmodul in Funktion eines Prozessrechners (Terminologie der Mess- Steuerungs- u. Regelungstechnik) ausgewertet wird und in Verbindung mit vorgegebenen, empirisch festgelegten Referenzparametern, nach Überschreiten einer Progressionsrate unter Berücksichtigung der Fahrtgeschwindigkeit und eines ablaufenden Zeitintervalls zu einer praktisch selektiven Auslösung der Warnblinklichteinrichtung respektive sonstiger präventiver Sicherheitsvorrichtungen führt, wie einer Aufprallschutzvorrichtung und einer Sicherheitsgurt-Anstraffervorrichtung sowie Sicherheitsgurt-Arretiervorrichtung.

2.  Automatische Auslösevorrichtung nach Anspruch 1, dadurch gekennzeichnet,
    daß, entsprechend - Methode 2 -, die Summen der zeitkonstanten Impulse des Quarztakters jeweils von den aufeinander folgenden (Trigger-) Impulsen der umfangsgleich angeordneten Drehimpulsgeber begrenzt werden und somit digital und analog zu den veränderlichen Zeitsequenzen zur Weiterbehandlung verwendet werden können.

3.  Automatische Auslösevorrichtung nach Anspruch 1 oder 2, dadurch gekennzeichnet,
    daß zur Fahrtgeschwindigkeit gehörende Referenzparameter mittels eigens vorgesehener Funktionsstufe des Processors empirisch unter entsprechender abrupter Vollbremsung aufgenommen und gespeichert werden können, die, auf weitere Zwischengeschwindigkeiten vom Processor selbsttätig interpoliert sowie abrufgespeichert, jeweils für den Fall einer einsetzenden Pnikbremsung als Referenzvergleich, bezogen auf die Ausgangsgeschwindigkeit aus der gebremst wird, herangezogen werden können.

4. Automatische Auslösevorrichtung nach vorgehenden Ansprüchen dadurch gekennzeichnet,

daß der Processor über eine - Self-Learning - Funktionsstufe verfügt, die nach Bauteileveränderungen, wie nach Reparatur oder Verschleiß, ständig oder sporadisch eingeschaltet werden kann und unter entsprechenden Vollbremsungen aus einigen unterschiedlichen Fahrtgeschwindigkeiten in autonomer Funktion zu den optimalen, neuangepaßten Referenzparametern findet.

5. Automatische Auslösevorrichtung nach vorgehenden Ansprüchen dadurch gekennzeichnet,

daß der Processor in integrierter Funktion nach vorwählbarem Modus die Leuchtstärke und die Blinkfrequenz der Blinklichter vorgibt sowie variiert, so daß nach empirischer Ermittlung Kombinationen und Sequenzen von Blinkfrequenz und zugehöriger Leuchtintensität ermöglicht werden, die eine erhebliche Steigerung in einer reaktiven Warnwirkung zur Folge haben können.

EP 0 761 499 A1

<table>
<tr><td colspan="4" align="center">EINSCHLÄGIGE DOKUMENTE</td><td rowspan="2">KLASSIFIKATION DER ANMELDUNG (Int.Cl.6)</td></tr>
</table>

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-39 07 714 (BATTELLE-INSTITUT EV ) <br> * das ganze Dokument * <br> --- | 1 | B60Q1/44 <br> B60R21/00 |
| A | GB-A-2 175 462 (HEPBURN) <br> * das ganze Dokument * <br> --- | 1 | |
| A | FR-A-2 658 138 (MARTINIS ET LELOGEAIS) <br> * Zusammenfassung; Abbildung 1 * <br> --- | 1 | |
| A | GB-A-2 214 009 (LIN) <br> * Zusammenfassung; Abbildung 1 * <br> --- | 1 | |
| A | FR-A-2 662 123 (MONTEIRO) <br> * Zusammenfassung; Abbildung 1 * <br> --- | 1 | |
| A,P | US-A-5 481 243 (LURIE) <br> * Spalte 3, Zeile 36 - Spalte 4, Zeile 42; Abbildung 1 * <br> --- | 1 | |
| A,D | DE-A-41 39 215 (BUCK WERKE GMBH) <br> * Zusammenfassung; Abbildung 2 * <br> ----- | 1 | RECHERCHIERTE SACHGEBIETE (Int.Cl.6) <br><br> B60Q <br> B60R |

Der vorliegende Recherchenbericht wurde für alle Patentansprüche erstellt

| Recherchenort | Abschlußdatum der Recherche | Prüfer |
|---|---|---|
| DEN HAAG | 27.September 1996 | Onillon, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

9